# EUROPEAN PATENT SPECIFICATION

(11) **EP 2 161 477 B1**
(45) Date of publication and mention of the grant of the patent: **22.08.2012**
(21) Application number: 08715210.4
(22) Date of filing: 11.03.2008
(51) Int. Cl.: B25F 5/00, F16H 3/66

(54) **A MULTI-SPEED REDUCING GEAR BOX**
MEHRSTUFIGES UNTERSETZUNGSGETRIEBE
RÉDUCTEUR DE VITESSE À PLUSIEURS RAPPORTS

(30) Priority: 26.03.2007 CN 200720036439 U
(43) Date of publication of application: 10.03.2010
(73) Proprietor: Wuxi Kangge Industrial Design Co., Ltd., Jiangsu 214028 (CN)
(72) Inventor: QIN, Xiaofeng, Jiangsu 214028 (CN)
(74) Representative: Banzer, Hans-Jörg
(86) International application number: PCT/CN2008/070474
(87) International publication number: WO 2008/116412

(56) References cited:
- EP-A1- 1 445 074
- CN-C- 1 179 811
- CN-Y- 201 027 929
- JP-A- 10 151 577
- JP-A- 2004 160 592
- JP-A- 2004 160 592
- US-A- 6 070 675
- US-B1- 6 758 783

## Description

### FIELD OF THE INVENTION

The present invention relates to a gear box, and more particularly to a multilevel speed reduction gear box according to the preamble of claim 1, that is applicable to a cordless rotary electric tool. In the multilevel speed reduction gear box, a control member is driven by an operation member to selectively confine the rotation of a gear support or an internal gear in a transmission member, such that different transmission relations are respectively formed at an input member and an output member, and meanwhile the output member is enabled to obtain a rotation speed in a rotation direction opposite to that of the input member.

### BACKGROUND

Currently, a cordless rotary electric tool usually needs a speed reduction gear box to provide multilevel rotation speed or multilevel torsion. Due to the limitation of factors such as space, mechanism, and cost, only a second-level or third-level rotation speed, which cannot fully satisfy the using demands, is provided. In addition, the structure is rather complicated, which makes it inconvenient to maintain. It is well known that, a rotation direction of an output member of the speed reduction gear box in the cordless rotary electric tool is generally maintained to be consistent with that of an input member. Once the electric tool is rapidly started or suddenly stopped, the electric tool may shake due to an inertia effect, thereby causing discomfort or even causing potential safety hazard for an operator. JP 2004 160592 A discloses a multilevel speed reduction gear box according to the preamble of claim 1.

### SUMMARY OF THE INVENTION

In view of the problems in the prior art that a gear box for a cordless electric tool produces intense shaking when the electric tool is started or stopped and has a complicated structure, the present invention provides a multilevel speed reduction gear box, which is capable of providing at least second-level rotation speed, and an output member rotates in a direction opposite to an input member, thereby reducing the shaking phenomenon when the electric tool is rapidly started or suddenly stopped.

According to the invention, this multilevel speed reduction gear box is described in claim 1. The dependent claims define preferred and advantageous embodiments of the invention.

The technical solutions of the present invention are described as follows:
A multilevel speed reduction gear box is provided, which includes a case, a control member, an operation member, a transmission member, an input member, and an output member.

The case has a plurality of elongated holes and an inner cavity. A plurality of axial slots is disposed on an inner wall of the inner cavity.

The control member includes a control ring gear and a plurality of control pin columns. The control ring gear has an internal groove and a plurality of convex teeth. The convex teeth are slidably fitted with the axial slots on the inner wall of the inner cavity of the case.

The operation member is a group of elements capable of driving the control member to slide axially and to be positioned selectively.

The transmission member is formed by a gear support, a plurality of planetary gear sets installed on wheel shafts of the gear support, and one or more internal gears .

The input member is a group of coupler gears installed on an output shaft of a motor. The coupler gears are respectively engaged with the planetary gear sets in the transmission member.

The output member has an output gear and an internal gear. The internal gear is engaged with a planetary gear set in the transmission member.

The output member, the transmission member, the control member, and the input member are disposed within the inner cavity of the case in sequence. The control member slides non-rotationally in the inner cavity of the case. The operation member is installed on an outer wall of the case. The control pin columns are respectively connected to the control ring gear and the operation member after passing through the elongated holes of the case. The operation member drives the control member to selectively confine the rotation of the gear support in the transmission member or one of the one or more internal gears in the transmission member.

When the operation member drives the control member to selectively confine the rotation of the gear support or the internal gears in the transmission member, the output member may provide multilevel rotation speed in a rotation direction opposite to that of the input member.

According to a preferred embodiment of the invention, the gear support and the internal gears are configured with the same external gear engaged with the internal gear of the control ring gear in the control member.

The gear support is provided with wheel shafts, and the number of the wheel shafts is no less than the number of planetary gears in the planetary gear set with the largest number of planetary gears.

According to another embodiment of the invention, the operation member is formed by a rotary liner, positioning beads, springs, and a rear cover. A plurality of positioning slots and spiral slots is disposed on an inner wall of the rotary liner. The positioning beads are engaged with the corresponding positioning slots. The rear cover is provided with a cavity for accommodating the positioning beads and the springs. The spiral slots are slidably fitted with the control pin columns in the control member.

The output gear in the output member may be connected to the output shaft directly or through a secondary speed reduction device.

The present invention has the following advantages.

The present invention has a simple, compact, appropriate, and rational structure. The output member is capable of outputting a second-level or even higher level rotation speed in a direction opposite to the input member. When an electric tool is rapidly started or suddenly stopped, the output member and the input member generate inertia forces counteracting each other, so as to provide a comfortable and safe using environment for the operator.

### BRIEF DESCRIPTION OF THE DRAWINGS

FIG. 1 is a three-dimensional exploded view of a preferred embodiment of the present invention;
FIG. 2 is a partial sectional view of a preferred embodiment of the present invention when outputting a first-level rotation speed;
FIG. 3 is a partial sectional view of a preferred embodiment of the present invention when outputting a second-level rotation speed;
FIG. 4 is a partial sectional view of a preferred embodiment of the present invention when outputting a third-level rotation speed; and
   1. Case; 11. Inner cavity; 12. slot; 13. Elongated hole; 2. Output member; 21. Output gear; 22. First internal gear; 3. Transmission member; 31. First planetary gear set; 32. Gear support; 321. First external groove; 322. Wheel shaft; 33. Second planetary gear set; 34. Second internal gear; 341. Second external groove; 35. Third planetary gear set; 36. Third internal gear; 361. Third external groove; 4. Control member; 41. Control ring gear; 411. Pin hole; 412. Convex Tooth; 413. Internal ring; 42. Pin column; 5. Operation member; 51. Rotary liner; 511. First positioning slot; 512. Second positioning slot; 513. Third positioning slot; 514. Spiral slot; 52. Positioning bead; 53. Spring; 54. Rear cover; 541. Cavity; 6. Input member; 61. First input gear; 62. Second input gear; 63. Third input gear.

### DETAILED DESCRIPTION OF THE PRESENT INVENTION

The present invention is further illustrated below with reference to the accompanying drawings and embodiments.

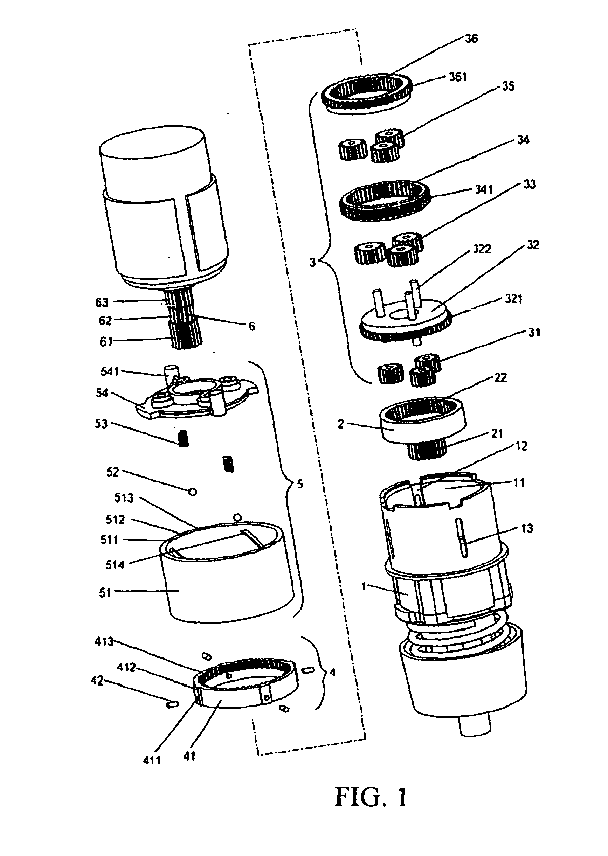

Referring to FIG. 1, a multilevel speed reduction gear box is mainly formed by a case 1, an output member 2, a transmission member 3, a control member 4, an operation member 5, and an input member 6. The output member 2, the transmission member 3, the control member 4, and the input member 6 are respectively installed within the case 1. The operation member 5 is rotationally sleeved on the case 1. The present invention is illustrated in detail below by taking a three-level speed reduction gear as an example.

The case 1 is a cylindrical shell with an inner cavity 11. A plurality of elongated holes 13 providing a guiding function along an axial direction is disposed on a wall of the case 1. An axial key slot 12 is disposed on an inner wall of the inner cavity 11 opposite to the elongated holes 13.

The output member 2 is disposed with an output gear 21 and a first internal gear 22. The output gear 21 may be connected to a rotating shaft of an electric tool directly or connected to the rotating shaft of the electric tool through a speed reduction mechanism.

The transmission member 3 is formed by a first planetary gear set 31, a gear support 32, a second planetary gear set 33, a second internal gear 34, a third planetary gear set 35, and a third internal gear 36. The gear support 32 is disposed with a first external gear 321 and wheel shafts 322. The first planetary gear set 31, the second planetary gear set 33, and the third planetary gear set 35 are all rotationally disposed on the wheel shafts 322. The number of the wheel shafts 322 may be three, or may also be more than three depending upon the actual demands. However, basically, each planetary gear in all the planetary gear sets 31, 33, and 35 requires a corresponding wheel shaft, so as to be installed thereon. The first internal gear 22 is rotationally engaged with the first planetary gear set 31. The second internal gear 34 is rotationally engaged with the second planetary gear set 33, and has a second external gear 341 configured on an external part thereof. The third internal gear 36 is rotationally engaged with the third planetary gear set 35, and has a third external gear 361 configured on an external part thereof.

The control member 4 is formed by a control ring gear 41 and pin columns 42. The control ring gear 41 has pin holes 411, keys 412, and an internal gear 413. The pin holes 411 may be connected to the pin columns 42. The keys 412 are slidably fitted with the key slots 12. The internal gear 413 may be respectively engaged with the first external gear 321, the second external gear 341, and the third external gear 361.

The operation member 5 is formed by a rotary liner 51, positioning beads 52, springs 53, and a rear cover 54. The operation member 5 is sleeved on the case 1. The rotary liner 51 has a first positioning slot 511, a second positioning slot 512, a third positioning slot 513, and spiral slots 514. The positioning beads 52 may be respectively engaged with the first positioning slot 511, the second positioning slot 512, and the third positioning slot 513. The rear cover 54 has a cavity 541 for accommodating the positioning beads 52 and the springs 53. The spiral slots 514 are slidably fitted with the pin columns 42.

The input member 6 is a triple-coupler gear, in which a first input gear 61, a second input gear 62, and a third input gear 63 are rotationally engaged with the first planetary gear set 31, the second planetary gear set 33, and the third planetary gear set 35 respectively.

In a preferred embodiment of the invention, the number of teeth in the first input gear 61 is 18, the number of teeth in the second input gear 62 is 12, the number of teeth in the third input gear 63 is 15, the number of teeth in the first internal gear 22 is 48, the number of teeth in the second internal gear 34 is 45, and the number of teeth in the third internal gear 36 is 48.

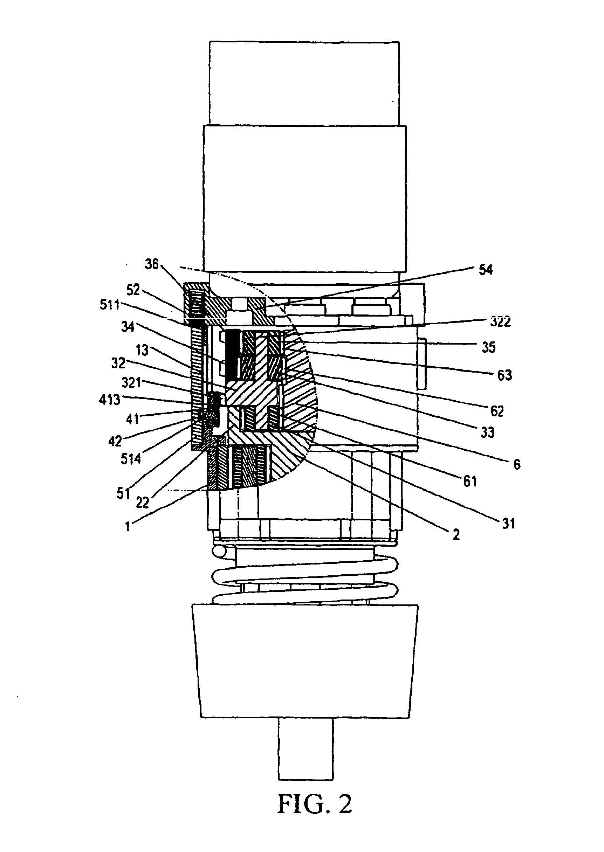

As shown in FIGs. 2, 3, and 4, after all members are disposed in sequence, the pin columns 42 are inserted in the spiral slots 514 on an inner wall of the operation member 5 after passing through the elongated holes 13 and the control ring gear 41. When an operator rotates the rotary liner 51, the spiral slots 514 drive the pin columns 42 to actuate the control ring gear 41 to slide axially.

As shown in FIG. 2, when the operator rotates the rotary liner 51 to a position where the first positioning slot 511 and the positioning bead 52 are engaged, the internal gear 413 and the first external gear 321 are engaged. At the same time, the rotation of the gear support 32 is confined. The second internal gear 34 and the third internal gear 36 are both in a rotatable status. The first input gear 61 drives the first internal gear 22 to rotate in an opposite direction through the first planetary gear set 31. Therefore, the output member 2 obtains a first-level rotation speed in a rotation direction opposite to that of the input member 6. At this time, a transmission ratio between the output member 2 and the input member 6 is about -1:2.67.

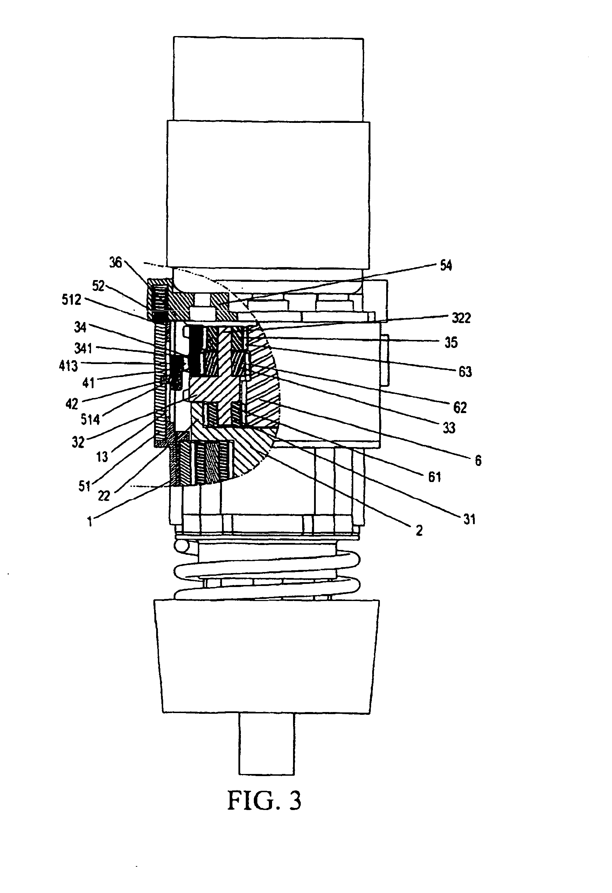

As shown in FIG. 3, when the operator rotates the rotary liner 51 to a position where the second positioning slot 512 and the positioning bead 52 are engaged, the internal gear 413 and the second external gear 341 are engaged. At the same time, the rotation of the second internal gear 34 is confined. The gear support 32 and the third internal gear 36 are both in a rotatable status. The second input gear 62 drives the gear support 32 to rotate in the same direction through the second planetary gear set 33. As a teeth number ratio between the second input gear 62 and the second internal gear 34 is smaller than that between the first input gear 61 and the first internal gear 22, the first input gear 61 drives the first internal gear 22 to rotate in an opposite direction through the first planetary gear set 31. Therefore, the output member 2 obtains a second-level rotation speed in a rotation direction opposite to that of the input member 6. At this time, a transmission ratio between the output member 2 and the input member 6 is about -1:11.69.

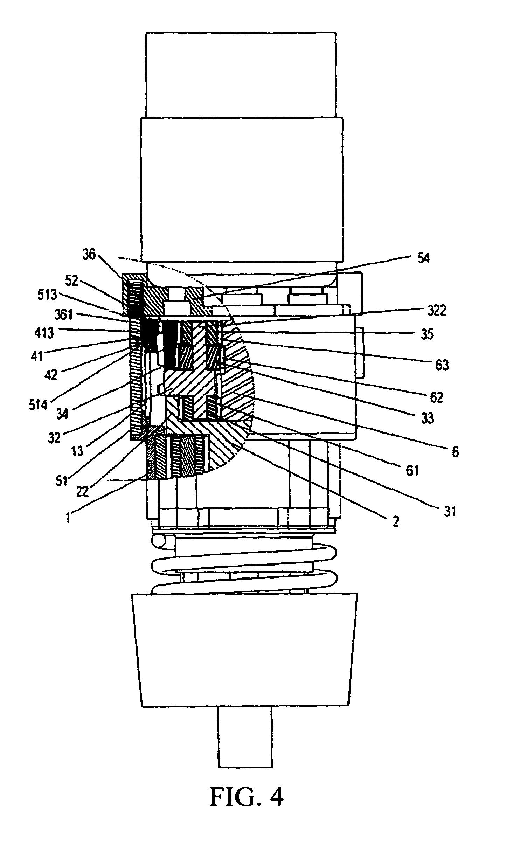

As shown in FIG. 4, when the operator rotates the rotary liner 51 to a position where the third positioning slot 513 and the positioning bead 52 are engaged, the internal gear 413 and the third external gear 361 are engaged. At the same time, the rotation of the third internal gear 36 is confined. The gear support 32 and the second internal gear 34 are both in a rotatable status. The third input gear 63 drives the gear support 32 to rotate in the same direction through the third planetary gear set 35. As a teeth number ratio between the third input gear 63 and the third internal gear 36 is smaller than that between the first input gear 61 and the first internal gear 22, the first input gear 61 drives the first internal gear 22 to rotate in an opposite direction through the first planetary gear set 31. Therefore, the output member 2 obtains a third-level rotation speed in a rotation direction opposite to that of the input member 6. At this time, a transmission ratio between the output member 2 and the input member 6 is -1:21.

The above disclosure is only intended to describe the invention, rather than limiting the preferred embodiments of the invention, which does not cover all embodiments of the invention as defined in the claims. Persons skilled in the art can make simple variations on the basis of the preferred embodiments of the present invention to obtain some new embodiments. For example, the teeth number of each internal gear or external gear is changed to change a transmission ratio between an output member and an input member. For example, rolling bearings are added between the planetary gears and the wheel shafts to enhance the transmission efficiency. Furthermore, the number of gears in the planetary gear set and the number of coupler gears in the input member and correspondingly the number of the planetary gear sets may be changed, so as to realize the speed reduction at different levels, such that the present invention can be widely adjusted and the user can make various choices.

A working principle of the present invention is as follows:
When the control member confines the rotation of the gear support in the transmission member, the input member drives the output member to rotate in an opposite direction through a planetary gear set in the transmission member. Assuming that a teeth number ratio between the input member and the output member is i₁ and a rotation speed of the input member is n₁, a rotation speed of the output member is n=- n₁ i₁. i₁. When the control member confines the rotation of the internal gear in the transmission member, the input member drives the gear support to rotate in the same direction through a planetary gear set in the transmission member, so that a differential transmission relation is formed between the input member and the output member. Assuming that the teeth number ratio between the input member and the output member is i₁, the teeth number ratio between the input member and the internal gear in the transmission member is i₂, and the rotation speed of the input member is n₁, the rotation speed of the output member is n=n₁(i₂-i₁)/(i₂ +1). When i₂ <i₁, n is negative, that is, the output member rotates in a direction opposite to the input member. When the number of the planetary gear sets in the transmission member is 2 and the number of the internal gear of the transmission member is 1, the output member is enabled to output two levels of rotation speeds in a direction opposite to that of the input member. When the number of the planetary gear sets in the transmission member is 3 and the number of the internal gears of the transmission member is 2, the output member is enabled to output three levels of rotation speeds in a direction opposite to that of the input member. Similarly, by increasing the number of planetary gear sets and internal gears in the transmission member, the output member is enabled to output more levels of rotation speeds in a direction opposite to that of the input member, thereby realizing multilevel speed reduction transmission.

## Claims

1. A multilevel speed reduction gear box, comprising:
a case (1), comprising a plurality of elongated holes (13) and an inner cavity (11), wherein a plurality of axial slots (12) is disposed on an inner wall of the inner cavity (11);
a control member (4), comprising a control ring gear (41) and a plurality of control pin columns (42), wherein the control ring gear (41) has an internal groove (413) and a plurality of convex teeth (412), and the plurality of convex teeth (412) are slidably fitted with the axial slots (12) on the inner wall of the inner cavity (11) of the case (1);
an operation member (5), being a group of elements (51-54) capable of driving the control member (4) to slide axially and to be positioned selectively;
a transmission member (3), formed by a gear support (32), a plurality of planetary gear sets (31, 33, 35) installed on wheel shafts (322) of the gear support (32) and one or more internal gears (34, 36);
an input member (6), being a group of coupler gears (61-63) installed on an output shaft of a motor, wherein the coupler gears (61-63) are respectively engaged with the planetary gear sets (31, 33, 35) in the transmission member (3); and
an output member (2), comprising an output gear (21),
**characterized in that**
the output member (2) further comprises an internal gear (22), wherein the internal gear (22) is engaged with a planetary gear set (31) in the transmission member (3);
wherein the number of the plurality of planetary gear sets (31, 33, 35) is the same as the number of the internal gears (22, 34, 36) of the transmission member (3) and the output member (2); and
wherein the output member (2), the transmission member (3), the control member (4), and the input member (6) are disposed within the inner cavity (11) of the case (1) in sequence, the control member (4) slides non-rotationally in the inner cavity (11) of the case (1), the operation member (5) is installed on an outer wall of the case (1), the control pin columns (42) are respectively connected to the control ring gear (41) and the operation member (5) after passing through the elongated holes (13) of the case (1), and the operation member (5) is adapted to drive the control member (4) to selectively confine the rotation of the gear support (32) in the transmission member (3) or one of the one or more internal gears in the transmission member (3).

2. The multilevel speed reduction gear box according to claim 1 wherein when the operation member (5) drives the control member (4) to selectively confine rotation of the gear support (32) or internal gears (34, 36) in the transmission member (3), the output member (2) provides multilevel rotation speed in a rotation direction opposite to that of the input member (6).

3. The multilevel speed reduction gear box according to claim 1 or 2, wherein the gear support (32) and the one or more internal gears (34, 36) of the transmission member (3) are configured with the same external groove (341, 361) engaged with the internal groove (413) of the control ring gear (41) in the control member (4).

4. The multilevel speed reduction gear box according to any one of claims 1-3, wherein the operation member (5) comprises a rotary liner (51), positioning beads (52), springs (53), and a rear cover (54); a plurality of positioning slots (511-513) and spiral slots (514) is disposed on an inner wall of the rotary liner (51); the positioning beads (52) are engaged with corresponding positioning slots (511-513); the rear cover (54) is provided with a cavity (541) for accommodating the positioning beads (52) and the springs (53); and the spiral slots (514) are slidably fitted with the control pin columns (42) in the control member (4).

5. The multilevel speed reduction gear box according to any one of claims 1-4, wherein the output gear (21) in the output member (2) is connected to the output shaft directly or through a secondary speed reduction device.

## Patentansprüche

1. Mehrstufiges Untersetzungsgetriebe, umfassend:
ein Gehäuse (1) umfassend eine Vielzahl von länglichen Löchern (13) und einen inneren Hohlraum (11), wobei eine Vielzahl von axialen Schlitzen (12) auf einer Innenwand des inneren Hohlraums (11) angeordnet ist;
ein Steuerteil (4) umfassend einen Steuer-Zahnkranz (41) und eine Vielzahl von Steuer-Stiftsäulen (42), wobei der Steuer-Zahnkranz (41) eine innere Nut (413) und eine Vielzahl von konvexen Zähnen (412) aufweist, und wobei die Vielzahl von konvexen Zähnen (412) gleitend in die axialen Schlitze (12) der Innenwand des inneren Hohlraums (11) des Gehäuses (1) eingepasst sind;
ein Betätigungsteil (5), welches eine Gruppe von Elementen (51-54) ist, welche das Steuerteil (4) antreiben können, um axial zu gleiten und selektiv positioniert zu werden;
ein Übertragungsteil (3), welches durch ein Getriebelager (32), eine Vielzahl von auf Radwellen (322) des Getriebelagers (32) installierten Planetengetriebesätzen (31, 33, 35) und ein oder mehreren Innenzahnrädern (34, 36) gebildet ist;
ein Eingangsteil (6), welches eine Gruppe von auf einer Ausgangswelle eines Motors installierten Koppelgetrieben (61-63) ist, wobei die Koppelgetriebe (61-63) jeweils mit den Planetengetriebesätzen (31, 33, 35) in dem Übertragungsteil (3) in Eingriff stehen; und
ein Ausgangsteil (2), welches ein Ausgangsgetriebe (21) umfasst,
**dadurch gekennzeichnet,**
**dass** das Ausgangsteil (2) weiter ein Innenzahnrad (22) umfasst, wobei das Innenzahnrad (22) mit einem Planetengetriebesatz (31) in dem Übertragungsteil (3) in Eingriff steht;
wobei die Anzahl der Vielzahl von Planetengetriebesätzen (31, 33, 35) der Anzahl der Innenzahnräder (22, 34, 36) des Übertragungsteils (3) und des Ausgangsteils (2) entspricht; und
wobei das Ausgangsteil (2), das Übertragungsteil (3), das Steuerteil (4) und das Eingangsteil (6) der Reihe nach innerhalb des inneren Hohlraums (11) des Gehäuses (1) angeordnet sind, das Steuerteil (4) nicht drehbar in dem inneren Hohlraum (11) des Gehäuses (1) gleitet, das Betätigungsteil (5) auf einer Außenwand des Gehäuses (1) installiert ist, die Steuer-Stiftsäulen (42) jeweils mit dem Steuer-Zahnkranz (41) und dem Betätigungsteil (5) verbunden sind, nachdem sie durch die länglichen Löcher (13) des Gehäuses (1) durchlaufen haben, und das Betätigungsteil (5) angepasst ist, um das Steuerteil (4) anzutreiben, die Rotation des Getriebelagers (32) in dem Übertragungsteil (3) oder eines der einen oder mehreren Innenzahnräder in dem Übertragungsteil (3) selektiv zu beschränken.

2. Mehrstufiges Untersetzungsgetriebe nach Anspruch 1, wobei das Ausgangsteil (2) eine mehrstufige Rotationsgeschwindigkeit in einer Rotationsrichtung entgegengesetzt zu derjenigen des Eingangsteils (6) bereitstellt, wenn das Betätigungsteil (5) das Steuerteil (4) zum selektiven Beschränken der Rotation des Getriebelagers (32) oder der Innenzahnräder (34, 36) in dem Übertragungsteil (3) antreibt.

3. Mehrstufiges Untersetzungsgetriebe nach Anspruch 1 oder 2, wobei das Getriebelager (32) und das eine oder die mehreren Innenzahnräder (34, 36) des Übertragungsteils (3) mit derselben Außennut (341, 361), welche sich mit der Innennut (413) des Steuer-Zahnkranzes (41) in dem Steuerteil (4) in Eingriff befindet, ausgestaltet sind.

4. Mehrstufiges Untersetzungsgetriebe nach einem der Ansprüche 1-3, wobei das Betätigungsteil (5) eine Rotationsbuchse (51), Positioniersicken (52), Federn (53) und eine Rückabdeckung (54) umfasst, wobei eine Vielzahl von Positionierschlitzen (511-513) und Spiralschlitzen (514) auf einer Innenwand der Rotationsbuchse (51) angeordnet ist, die Positioniersicken (52) in Eingriff mit entsprechenden Positionierschlitzen (511-513) stehen, die Rückabdeckung (54) mit einem Hohlraum (541) zum Aufnehmen der Positioniersicken (52) und der Federn (53) versehen ist und die Spiralschlitze (514) gleitend mit den Steuer-Stiftsäulen (42) in dem Steuerteil (4) in Eingriff stehen.

5. Mehrstufiges Untersetzungsgetriebe nach einem der Ansprüche 1-4, wobei das Ausgangsgetriebe (21) in dem Ausgangsteil (2) direkt oder über eine zweite Untersetzungseinrichtung mit der Ausgangswelle verbunden ist.

## Revendications

1. Réducteur de vitesse à plusieurs rapports, comprenant :
un carter (1), comprenant une pluralité de trous allongés (13) et une cavité interne (11), dans lequel une pluralité de fentes axiales (12) est disposée sur une paroi interne de la cavité interne (11) ;
un organe de commande (4), comprenant une couronne de commande (41) et une pluralité de colonnes d'axe de commande (42), dans lequel la couronne de commande (41) comporte une rainure interne (413) et une pluralité de dents convexes (412), et la pluralité de dents convexes (412) sont ajustées de façon coulissante avec les fentes axiales (12) sur la paroi interne de la cavité interne (11) du carter (1) ;
un organe opérationnel (5), qui est un groupe d'éléments (51 à 54) pouvant entraîner l'organe de commande (4) de façon à ce qu'il coulisse axialement et qu'il soit positionné sélectivement ;
un organe de transmission (3) formé par un support d'engrenage (32), une pluralité de jeux d'engrenages planétaires (31, 33, 35) installée sur des arbres de roue (322) du support d'engrenage (32) et un ou plusieurs engrenages internes (34, 36) ;
un organe d'entrée (6), qui est un groupe d'engrenages d'accouplement (61 à 63) installés sur un arbre de sortie d'un moteur, dans lequel les engrenages d'accouplement (61 à 63) sont respectivement mis en prise avec les jeux d'engrenages planétaires (31, 33, 35) dans l'organe de transmission (3) ; et
un organe de sortie (2), comprenant un engrenage de sortie (21),
**caractérisé en ce que**
l'organe de sortie (2) comprend en outre un engrenage interne (22), dans lequel l'engrenage interne (22) est mis en prise avec un jeu d'engrenages planétaires (31) dans l'organe de transmission (3) ;
dans lequel le nombre de la pluralité de jeux d'engrenages planétaires (31, 33, 35) est identique au nombre des engrenages internes (22, 34, 36) de l'organe de transmission (3) et l'organe de sortie (2) ; et
dans lequel l'organe de sortie (2), l'organe de transmission (3), l'organe de commande (4), et l'organe de sortie (6) sont disposés à l'intérieur de la cavité interne (11) du carter (1) dans l'ordre, l'organe de commande (4) coulisse de façon non rotationnelle dans la cavité interne (11) du carter (1), l'organe opérationnel (5) est installé sur une paroi externe du carter (1), les colonnes d'axe de commande (42) sont respectivement raccordées à la couronne de commande (41) et l'organe opérationnel (5) après passage à travers les trous allongés (13) du carter (1) et l'organe opérationnel (5) est adapté pour entraîner l'organe de commande (4) afin qu'il confine sélectivement la rotation du support d'engrenage (32) dans l'organe de transmission (3) ou un des un ou plusieurs engrenages internes dans l'organe de transmission (3).

2. Réducteur de vitesse à plusieurs rapports selon la revendication 1, dans lequel l'organe opérationnel (5) entraîne l'organe de commande (4) afin qu'il confine sélectivement la rotation du support d'engrenage (32) ou des engrenages internes (34, 36) dans l'organe de transmission (3), l'organe de sortie (2) fournit une vitesse de rotation plusieurs rapports dans un sens de rotation opposé à celui de l'organe d'entrée (6).

3. Réducteur de vitesse à plusieurs rapports selon la revendication 1 ou 2, dans lequel le support d'engrenage (32) et les un ou plusieurs engrenages internes (34, 36) de l'organe de transmission (3) sont configurés avec la même fente externe (341, 361) mise en prise avec la fente interne (413) de la couronne de commande (41) dans l'organe de commande (4).

4. Réducteur de vitesse à plusieurs rapports selon l'une quelconque des revendications 1 à 3, dans lequel l'organe opérationnel (5) comprend une enveloppe rotative (51), des billes de positionnement (52), des ressorts (53), et un capot arrière (54) ; une pluralité de fentes de positionnement (511 à 513) et des fentes en spirale (514) sont disposées sur une paroi interne de l'enveloppe rotative (51) ; les billes de positionnement (52) sont mises en prise avec des fentes de positionnement (511 à 513) correspondantes ; le capot arrière (54) est doté d'une cavité (541) pour loger les billes de positionnement (52) et les ressorts (53) ; et les fentes en spirale (514) sont ajustées de façon coulissante avec les colonnes d'axe de commande (42) dans l'organe de commande (4).

5. Réducteur de vitesse à plusieurs rapports selon l'une quelconque des revendications 1 à 4, dans lequel l'engrenage de sortie (21) dans l'organe de sortie (2) est raccordé à l'arbre de sortie directement ou via un dispositif de réduction de vitesse secondaire.
